# FASCICULE DE BREVET EUROPEEN

(11) **EP 3 319 200 B1**
(45) Date de publication et mention de la délivrance du brevet: **09.09.2020**
(21) Numéro de dépôt: 17196564.3
(22) Date de dépôt: 16.10.2017
(51) Int. Cl.: H02J 7/00

(54) **PROCÉDÉ ET SYSTÈME DE CONTRÔLE DE CHARGE D'UNE BATTERIE D'UN ÉQUIPEMENT ÉLECTRIQUE**
VERFAHREN UND SYSTEM ZUR LADEKONTROLLE EINER BATTERIE EINES ELEKTRISCHEN GERÄTS
METHOD AND SYSTEM FOR MONITORING THE CHARGE OF A BATTERY OF AN ELECTRICAL DEVICE

(30) Priorité: 03.11.2016 FR 1660643
(43) Date de publication de la demande: 09.05.2018
(73) Titulaire: COMMISSARIAT À L'ÉNERGIE ATOMIQUE ET AUX ÉNERGIES ALTERNATIVES, 75015 Paris (FR)
(72) Inventeur: TESSARD, Romain, 73100 AIX LES BAINS (FR)
(74) Mandataire: GIE Innovation Competence Group

(56) Documents cités:
- GB-A- 2 536 242
- JP-A- 2002 142 378
- JP-A- 2004 318 629
- US-A1- 2011 248 670
- US-A1- 2013 314 054
- US-A1- 2014 239 894
- US-A1- 2015 048 803

## Description

### Domaine technique de l'invention

La présente invention se rapporte à un procédé et un système de contrôle de charge d'une batterie rechargeable d'un équipement électrique.

### Etat de la technique

Les batteries ou accumulateurs rechargeables, notamment de type li-ion, sont actuellement largement utilisés pour alimenter des appareils électroniques nomades, tels que par exemple les téléphones portables. En vieillissant, ces batteries perdent en autonomie, entraînant une baisse de leur durée de vie. L'un des facteurs qui accélère le vieillissement d'une batterie est lié au maintien prolongé de la batterie dans des conditions proches de la charge maximale. Cela se produit notamment lorsque la batterie est en charge pendant la nuit. Elle atteint en effet rapidement son état de charge maximal et y reste le restant de la nuit. Une telle gestion de la charge est néfaste et a tendance à accélérer le vieillissement de la batterie.

Pour remédier au problème de vieillissement, une méthode connue consiste à définir un instant d'arrêt de la charge (correspondant au moment où l'utilisateur aura besoin de son appareil - par exemple le matin au réveil) et à commander une charge contrôlée de la batterie jusqu'à cet instant d'arrêt de la charge. L'instant d'arrêt de la charge sera par exemple l'heure prévue d'utilisation de l'appareil électrique. Grâce à cette charge contrôlée, la batterie passera moins de temps dans son état de charge maximal. Les demandes de brevets US2014/239894A1 et US2015/048803A1 décrivent de telles solutions de programmation de charge de batterie d'un appareil électrique.

Il s'avère cependant que ces solutions connues activent systématiquement une charge de la batterie dès la connexion à la source d'alimentation pour débuter le programme de charge prévu. Or, débuter la charge de la batterie dès qu'elle est raccordée à une source d'alimentation entraîne l'enclenchement d'un cycle de charge. Et si ce cycle de charge est prolongé alors qu'il n'est pas nécessaire, il aura tendance à accélérer le vieillissement de la batterie.

Les documents US2011/248670A1**,** GB2536242A et US2013/314054A1 décrivent également des solutions de charge de batterie.

Le document US2011/248670A1 décrit notamment une solution qui consiste à mettre en œuvre un mode de fonctionnement basse puissance ("Low power output mode") lors du démarrage de la charge. Ce mode est mis en œuvre lors de la vérification du mode de charge accepté par la batterie. Il s'agit en effet de vérifier si la batterie à charger accepte une charge rapide ou non. Ce mode de fonctionnement basse puissance est également employé comme solution de précharge lorsque la tension de la batterie est très faible. Ce document décrit par ailleurs que le mode de fonctionnement basse puissance ne dure que lors de la vérification du mode de charge accepté par la batterie ou lorsque la tension de la batterie est très faible.

Le but de l'invention est de proposer un procédé et un système de contrôle qui permettent de retarder et donc limiter le vieillissement d'une batterie à base de lithium. La solution de l'invention est particulièrement simple à mettre en œuvre, fiable et d'un coût modéré.

### Exposé de l'invention

Ce but est atteint par un procédé de contrôle de charge d'une batterie tel que défini en revendication 1.

Des particularités du procédé sont définis dans les revendications dépendantes.

La solution de l'invention est donc de réguler le courant de charge pour maintenir l'état de charge de la batterie à une valeur proche de son état de charge initial. Ce mode de fonctionnement est donc particulier car il consiste en une véritable régulation du courant de charge pour atteindre cet objectif et non en une simple limitation du courant de charge tel que mis en œuvre dans les modes basse consommation décrits dans l'état de la technique.

Il faut noter également noter que dans le document US2011/248670A1 évoqué ci-dessus, le mode de fonctionnement basse puissance ne dure que lors de la vérification du mode de charge accepté par la batterie ou lorsque la tension de la batterie est très faible.

Dans le cas de l'invention, le processus de contrôle du courant de charge se prolonge et la fin du processus n'intervient que pour l'un ou l'autre des deux critères suivants :
- Soit la réception d'une demande d'interruption pour obtention d'une puissance plus élevée à destination de l'équipement ;
- Soit la fin d'une durée prédéterminée (par exemple paramétrée par l'utilisateur) ;

Par ailleurs, l'invention concerne également un système de contrôle de la charge d'un batterie tel que défini en revendication 10.

Des particularités de ce système sont définies dans les revendications dépendantes.

### Brève description des figures

D'autres caractéristiques et avantages vont apparaître dans la description détaillée qui suit, faite en regard des dessins annexés dans lesquels :
- La figure 1 représente de manière schématique, une architecture de charge classique d'une batterie d'un équipement électrique.
- La figure 2 représente des courbes illustrant le principe de fonctionnement de l'invention.
- La figure 3 représente un exemple de réalisation du système de contrôle de charge de l'invention.
- La figure 4 représente les courbes de charge en courant et en tension pour une charge de type CC-CV.

### Description détaillée d'au moins un mode de réalisation

L'invention concerne un procédé de contrôle de charge d'une batterie d'un équipement électrique. Il comporte plusieurs étapes mises en œuvre pour contrôler la charge de la batterie. Les étapes seront détaillées ci-dessous.

L'invention concerne également un système de contrôle de charge d'une batterie d'un équipement électrique. Il s'agit alors du système et de ses différents composants matériels et/ou logiciels qui permettent de mettre en œuvre le procédé de contrôle de charge.

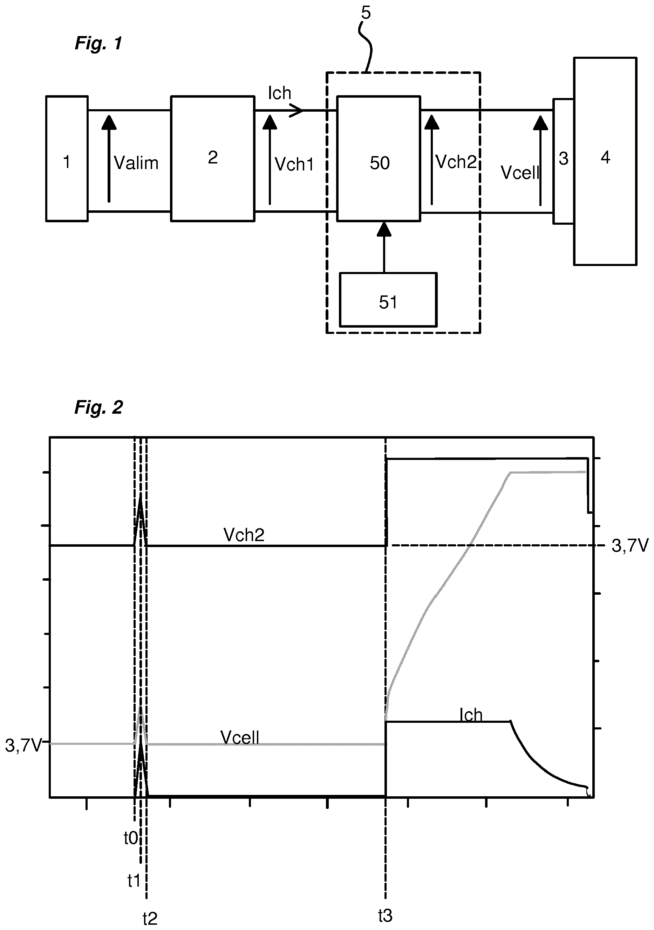

En référence à la figure 1, pour rappel, une architecture de charge comporte les caractéristiques suivantes :
- Une source d'alimentation 1, par exemple le réseau électrique ou une batterie externe (type "power bank"). La source d'alimentation 1 fournit une tension Valim, par exemple égale à 220 Volts, entre deux bornes d'alimentation.
- Un circuit de charge connecté entre les deux bornes d'alimentation et comportant un chargeur 2. Ce chargeur 2 se compose souvent d'un système d'alimentation à découpage destiné à adapter la tension fournie par la source d'alimentation à la tension de charge de la batterie. Ce chargeur 2 fournit en sortie une tension référencée Vch1 et génère un courant de charge de la batterie désigné Ich sur une ligne de charge reliant le chargeur à ladite batterie 3.

- Une batterie rechargeable 3. La batterie rechargeable 3 est par exemple à base de lithium telle qu'une batterie de type lithium-ion. La batterie 3 présente une tension à ses bornes désignée Vcell. Elle est par exemple associée à un équipement électrique 4 et permet d'alimenter cet équipement lorsque celui-ci n'est pas connecté à une source d'alimentation. La batterie pourra notamment être intégrée à l'équipement électrique 4, utilisant par exemple les moyens matériels et/ou logiciels de l'équipement pour sa gestion. Il est connu que la batterie et/ou l'équipement auquel elle est associée comporte une unité de gestion destinée à déterminer son état de charge (SOC) par mesure de tension aux bornes de ses différentes cellules.
- L'équipement électrique 4 est par exemple un appareil électronique nomade, tel que par exemple un téléphone portable. Mais il pourra s'agir de tout autre appareil qui peut être alimenté par une batterie rechargeable.

L'invention consiste principalement à ne pas déclencher immédiatement la charge de la batterie 3 lorsque son chargeur 2 vient d'être raccordé à la source d'alimentation, ceci de manière à ne pas charger la batterie inutilement

Il s'agit donc de mettre en place une première phase de pause de charge, le plus tôt possible après la connexion du chargeur 2 et de la batterie 3 à la source d'alimentation 1.

On entend par l'expression "pause de charge", une phase sans charge ou avec une charge bridée, c'est-à-dire destinée à maintenir l'état de charge (appelé couramment SOC pour "State Of Charge") de la batterie 3 à un niveau constant ou quasi-constant, c'est-à-dire compris entre plus ou moins 5% de l'état de charge initial, désigné SOC_ini. L'état de charge initial SOC_ini correspond préférentiellement à l'état de charge de la batterie lors de la connexion de la batterie à la source d'alimentation (à l'instant t0 qui sera défini ci-dessous). Cependant, cet état de charge initial pourra correspondre à un état de charge pris ultérieurement, l'instant initial pouvant être par exemple choisi par l'utilisateur.

Pour maintenir l'état de charge de la batterie à un niveau constant ou quasi-constant par rapport à l'état de charge initial, l'invention consiste à contrôler le courant de charge Ich ou la puissance de charge fourni à la batterie 3.

Si lorsqu'il est connecté à la source d'alimentation, l'équipement 4 consomme très peu, il s'agira alors de contrôler le courant de charge Ich ou la puissance de charge à une valeur très faible ou quasi-nulle. Dans ce cas, par courant (ou puissance) de charge très faible, on entend désigner un courant (ou une puissance) de charge au moins cent fois inférieur au courant (ou puissance) de régime nominal. Cependant, selon l'invention, il faut noter que pendant cette phase de pause de charge, le courant de charge Ich reste non nul.

A titre d'exemple :
- Pour un courant nominal de charge de 1A, le courant Ich durant une phase de pause de charge est non nul et par exemple inférieur ou égal à 10mA,
   ou
- Pour une puissance nominale de charge de 4W, la puissance durant une phase de pause de charge est non nulle et par exemple inférieure ou égale à 0,04W

Pour différents types d'appareil électrique, on aura ainsi un courant de charge limité dans les fourchettes suivantes :
- Téléphone mobile : de 1/1000 à 1/100 du courant nominal ;
- Ordinateur portable : de 1/100 à 1/10 du courant nominal ;
- Vélo-électrique, scooter,... : <1/1000 du courant nominal ;

Pendant, la phase de pause de charge, le courant de charge Ich est contrôlé tel que défini ci-dessus mais, celui-ci restant non nul, une tension Vch2 non nulle reste présente aux bornes de la batterie.

Ainsi, durant la phase de pause de charge, une tension étant maintenue en permanence, l'équipement électrique 4 ne détecte pas une déconnexion de la batterie 3 de la source d'alimentation 1. Tant que l'équipement 4 ne détecte pas l'absence d'une tension, il considère que la batterie 3 est toujours en charge.

En revanche, il faut aussi noter qu'il n'y aura pas de phase de pause de charge ou que celle-ci pourra être interrompue prématurément lorsque l'équipement électrique 4 a un besoin en puissance plus élevé que celui que le chargeur 2 peut fournir. Dans ce cas, la batterie 3 fournira le complément et la phase de pause de charge ne peut alors pas être mise en œuvre. Ce sera le cas par exemple lorsque l'utilisateur utilise l'équipement électrique alors que celui-ci est en en charge.

Le processus sera cependant maintenu tant que la demande d'interruption pour surplus de puissance requise n'a pas été reçue.

De manière plus concrète, pour mettre en œuvre cette phase de pause de charge, le système de contrôle 5 de l'invention comporte :
- Un dispositif de contrôle 50 du courant de charge fourni à la batterie 3, permettant de contrôler le courant de charge Ich dans les limites définies ci-dessus pour la phase de pause de charge, c'est-à-dire pour maintenir l'état de charge de la batterie à un niveau proche de l'état de charge initial SOC_ini. Ce dispositif de contrôle 50 est par exemple agencé pour fonctionner selon plusieurs modes de fonctionnement.
- Une unité de commande 51 chargée de commander ledit dispositif de contrôle entre ses différents modes de fonctionnement.

Le dispositif de contrôle 50 du système est connecté en série sur la ligne de charge de la batterie.

Le système de contrôle de l'invention pourra se présenter sous différentes formes :
- Un circuit indépendant connecté en sortie du chargeur 2 ;
- Un circuit indépendant mais intégré dans le même boîtier que le chargeur 2 ;
- Un circuit intégré au chargeur 2 et composé en partie ou en totalité de composants déjà présents dans le chargeur ;
- Un circuit indépendant intégré à l'équipement électrique 4 ;
- Un circuit intégré à l'équipement électrique 4 et composé en partie ou en totalité de composants déjà présents dans l'équipement électrique ;

Dans la suite de la description et de manière non limitative, on considérera qu'il est réalisé sous la forme d'un circuit électronique indépendant venant se connecter sur le circuit de charge de la batterie. Il se présentera par exemple sous la forme d'une clé, telle qu'une clé USB, venant se connecter entre le chargeur 2 et l'équipement.

A partir de l'architecture de charge décrite ci-dessus et en référence à la figure 2, le processus de charge qui met en œuvre le procédé de l'invention, est le suivant :
- A l'instant t0, la batterie 3 est connectée à la source d'alimentation 1, c'est-à-dire par exemple le réseau électrique, à travers son chargeur 2.
- La batterie 3 étant intégrée à un équipement électrique 4, ce dernier détecte à l'instant t1, grâce à un module de détection, la présence d'une tension de charge aux bornes de sa batterie 3, synonyme d'un début de charge.
- L'unité de commande 51 du système de contrôle 5 de l'invention détecte, grâce à un module de détection, la mise en charge de la batterie. Elle détermine ou acquiert l'information de l'état de charge initial SOC_ini de la batterie.
- A l'instant t2, postérieur à t1, l'unité de commande 51 du système 50 exécute un module de déclenchement de la phase de pause de charge, pour commander le dispositif de contrôle en vue de contrôler le courant de charge Ich. Lors de la pause de charge, le contrôle consiste préférentiellement à réguler le courant de charge Ich de sorte que la batterie 3 ne se charge pas ou très peu et maintienne un état de charge à un niveau sensiblement égal à l'état de charge initial SOC_ini, selon les limites définies ci-dessus. Le courant de charge Ich étant cependant non nul, une tension non nulle reste présente, égale à la tension nominale de la batterie (environ 3,7V pour une batterie lithium-ion). Il s'agit donc d'une charge à courant "quasi-nul" ou à puissance "quasi-nulle" car la batterie ne sera pas chargée. Le contrôle peut être réalisé à partir de toutes données disponibles, notamment sur la base de l'état de charge initial SOC_ini reçu et par comparaison régulière de l'état de charge courant avec cet état de charge initial SOC_ini, pour déterminer le contrôle adapté à un maintien de l'état de charge courant au niveau de l'état de charge initial SOC_ini.
- L'équipement électrique 4 n'ayant pas détecté une fin de charge (c'est-à-dire une tension nulle, synonyme de débranchement du chargeur), la phase de pause de charge est maintenue.
- La fin de la phase de pause de charge survient lorsque l'unité de commande 51 du système de contrôle de l'invention reçoit une commande indiquant qu'une charge à pleine puissance est nécessaire. Lors de la réception de cette commande à l'instant t3, l'unité de commande 51 agit sur le dispositif de contrôle 50 de manière à autoriser la circulation du courant de charge Ich, sans limitation. Il s'agira ensuite d'amener la batterie 3 dans un état de charge cible ou souhaité.

Selon un aspect particulier de l'invention, l'instant t3 de fin de pause de charge est déterminé :
- Soit à partir de la durée normale de fin de processus (cette durée étant par exemple paramétrable par l'utilisateur) ;
- Soit à partir de la réception d'une demande d'interruption du processus, liée à un surplus de puissance requis par l'équipement ;

Ces deux critères sont les seuls critères qui peuvent mettre fin au processus de pause de charge.

La commande de la charge sans limitation pourra être générée par différents composants et selon différentes manières :
- Elle pourra provenir de l'équipement électrique 4 et de son unité de traitement. Dans ce cas, elle pourra être communiquée à travers des interfaces de communication, filaires ou sans-fils.
- Elle pourra être générée automatiquement, après une durée déterminée de phase de pause de charge, cette durée (entre t2 et t3) pouvant être paramétrable par l'utilisateur.

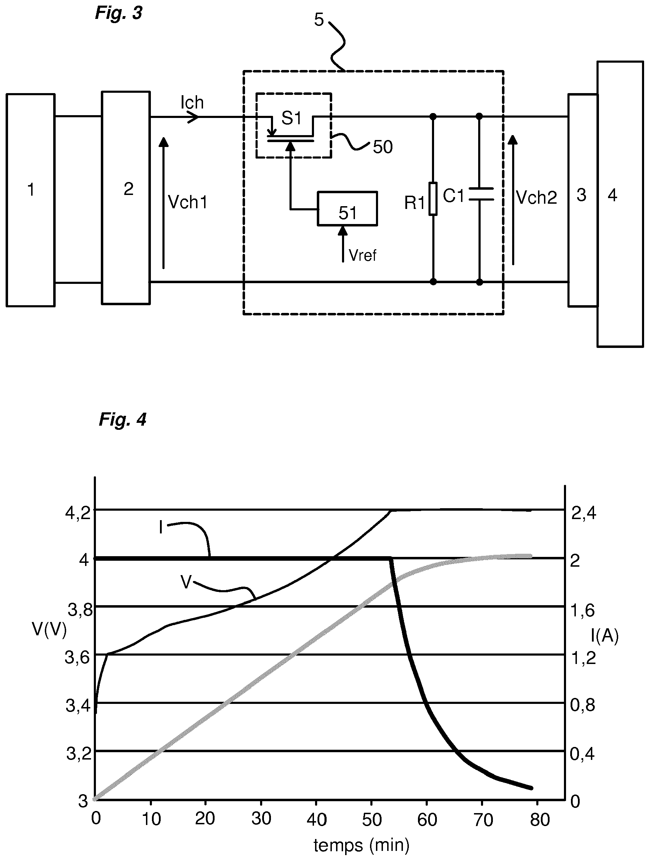

Pour amener la batterie 3 dans l'état de charge cible ou souhaité, la charge pourra être réalisée selon tout principe connu. Il pourra s'agir par exemple d'une charge de type CC-CV, c'est-à-dire composée d'une première phase dite à courant constant (CC) suivie d'une deuxième phase à tension constante (CV). La figure 4 représente les courbes de charge en courant et en tension selon ce principe CC-CV. Il pourra également s'agir d'une charge dite pulsée ou d'une charge à courant constant (CC).

L'instant t2 défini ci-dessus est postérieur à l'instant t1 auquel l'équipement électrique 4 détecte la connexion de la batterie 3 à la source d'alimentation pour être rechargée. Cet instant t2 est préférentiellement le plus proche possible de l'instant t0 de manière à mettre la batterie en phase de pause de charge au plus tôt après sa connexion, mais doit nécessairement être postérieur à l'instant t1 pour s'assurer que l'équipement électrique considère bien la batterie comme étant en cours de charge. L'instant t1 dépendant de la durée mise par l'équipement électrique pour détecter la connexion à la source électrique, l'instant t2 ne sera pas toujours identique.

L'instant t2 est par exemple déterminé par l'unité de commande, grâce à un module logiciel de détermination, selon différents modes de réalisation possibles :
- En appliquant un retard de durée déterminée après connaissance de l'instant t1. Dans ce cas, le retard sera appliqué après détection de présence d'un courant de charge Ich par le système de contrôle.
- En appliquant un retard de durée déterminée après l'instant t0, cette durée étant par exemple toujours identique quel que soit l'équipement électrique 4 et la durée de détection de la connexion à la source d'alimentation 1. Cette durée de retard sera donc choisie suffisamment longue pour être indépendante de la durée de détection de connexion de l'équipement électrique 4 à la source d'alimentation 1. Dans ce cas, le retard sera appliqué après la détection de présence d'une tension lors du branchement du chargeur 2 à la source d'alimentation 1.

Pour assurer la mise en œuvre de la séquence ci-dessus, l'unité de commande comporte avantageusement une horloge sur laquelle s'appuie le module de déclenchement du processus de l'invention.

L'instant t2 sera préférentiellement déterminé en appliquant un retard de durée, correspondant à au moins 0.1% ; de préférence 0.5% et de préférence 1% de la durée de charge totale de la batterie. Il s'agira par exemple d'un retard de 50 secondes pour une charge de 80 minutes environ.

Préférentiellement, le système de contrôle 5 de l'invention aura l'architecture représentée sur la figure 3.

Le dispositif de contrôle 50 du courant comporte ainsi un transistor S1, par exemple de type P-MOS, connecté en série sur la ligne de charge de la batterie 3. Le transistor sera préférentiellement choisi à appauvrissement, c'est-à-dire "normalement fermé" en l'absence de tension de grille.

Le transistor S1 sera préférentiellement commandé en linéaire pour adapter le niveau du courant de charge à fournir à la batterie 3.

Le transistor S1 est commandé par l'unité de commande 51. L'unité de commande 51 comporte avantageusement des composants discrets et/ou un microprocesseur.

Pour assurer la commande du dispositif de limitation, le microprocesseur reçoit en entrée :
- L'instant t0 de connexion de la batterie 3 à la source d'alimentation 1 ou l'instant t1 auquel l'équipement électrique 4 a détecté la connexion de la batterie 3 à la source d'alimentation.
- La valeur de la tension Vch2 appliquée par le système de contrôle 5.
- Une valeur de tension de référence, représentative de l'état de charge initial SOC_ini à maintenir.
- L'instant t3 auquel le passage en pleine charge doit être effectué ou l'instant auquel la batterie 3 doit atteindre un niveau de charge souhaité (par exemple charge complète).

Et le microprocesseur exécute :
- Un module de détermination de l'instant t2 d'activation du dispositif de contrôle du courant de charge, c'est-à-dire de génération d'une commande en tension à destination du transistor.
- Un module de déclenchement de la phase de pause de charge à l'instant t2.
- Un module de contrôle ou de régulation du courant de charge lors de la phase de pause de charge pour maintenir l'état de charge de la batterie à un niveau équivalent (dans les limites définies ci-dessus) à son état de charge initial SOC_ini.
- Un module de déclenchement de la fin de la phase de pause de charge à l'instant t3.
- Un module d'interruption ou de non mise en œuvre de la phase de pause de charge lorsque la puissance demandée par l'équipement dépasse celle que le chargeur peut fournir. Dans cette situation, le complément de puissance devra en effet être fourni par la batterie, empêchant la pause de charge.

A partir des données obtenues, l'unité de commande 51 génère ainsi :
- Une commande adaptée en tension sur la grille du transistor S1 du dispositif de contrôle 50 en vue de contrôler le courant de charge Ich ou la puissance de charge lors de la phase de pause de charge, pour maintenir la batterie à un état de charge dans son état de charge initial, tel que décrit ci-dessus.
- Une commande adaptée en tension sur la grille du transistor S1 du dispositif de contrôle 50 lors de la fin de la phase de pause de charge (absence de tension de grille si courant de charge maximal ou tension de grille déterminée pour adapter le niveau du courant de charge), pour permettre la charge de la batterie selon le mode de charge prévu, par exemple de type CC-CV. L'instant d'émission de cette commande et sa durée sont déterminés en fonction de l'instant t3 reçu ou de l'instant auquel la batterie 3 doit avoir atteint le niveau de charge souhaité (par exemple charge complète).

Pour générer les commandes, à destination du dispositif de contrôle, l'unité de commande 51 comporte par exemple un amplificateur à deux entrées et une sortie. Une première entrée est formée de la tension Vch2 appliquée en sortie et la deuxième entrée est une valeur de référence Vref. La sortie correspond à la tension de grille appliquée au transistor du dispositif de contrôle et permet de contrôler le courant de charge Ich pour maintenir la tension Vch2 constante et égale à Vref. La valeur de référence Vref est ajustée par le microprocesseur de l'unité de commande 51 pour générer la sortie de l'amplificateur et appliquer la tension de grille souhaitée. La valeur de référence est avantageusement représentative de l'état de charge initiale SOC_ini déterminé initialement. En variante de réalisation, il est possible d'employer également un amplificateur commandé en linéaire avec une valeur de référence en entrée constante et une commande variable ou un système à découpage.

Le système de contrôle 5 comporte également un condensateur C1 connecté entre ses deux lignes et une résistance R1 connectée entre ses deux lignes. Le condensateur C1 présente une capacité élevée et la résistance R1 une valeur élevée, afin de stabiliser la tension Vch2. La résistance aura par exemple une valeur de 10kOhm et le condensateur une capacité de 100µF dans le cas du contrôle de charge d'une batterie de téléphone portable.

Comme évoqué ci-dessus, le système 5 comporte avantageusement une interface de communication, filaire ou sans-fil, lui permettant de communiquer avec un dispositif externe, notamment pour un paramétrage. Il s'agira par exemple de paramétrer l'instant t2 d'activation de la phase de pause de charge après connexion de la batterie 3 et la durée de la phase de pause de charge (entre t2 et t3). Il pourra s'agir également de paramétrer des intervalles de limitation du courant de charge Ich, et la commande de l'amplificateur.

L'unité de commande 51 du système de contrôle 5 peut également être amené à utiliser des données liées à la batterie 3 en cours de chargement, afin d'adapter la phase de pause de charge. Ces données sont par exemple l'état de charge (appelé SOC pour "State Of Charge") initial de la batterie au moment de sa connexion à la source d'alimentation 1 (et à partir duquel la tension de référence Vref est adaptée par l'unité de commande), l'état de santé (SOH pour "State OF Health) de la batterie 3, déterminé par des algorithmes connus. Ces informations sont par exemple transmises par l'équipement électrique 4.

Selon une particularité de l'invention, si par exemple l'état de charge initial de la batterie présente un niveau élevé (par exemple supérieur à 50%), la phase de pause de charge de l'invention est automatiquement allongée. Sa durée sera par exemple fonction du niveau de l'état de charge initial de la batterie.

L'invention présente ainsi de nombreux avantages parmi lesquels :
- Il permet de préserver la santé de la batterie en ne déclenchant pas automatiquement sa charge après connexion à la source d'alimentation ;
- Il est facile à installer et fiable ;
- Il est peu coûteux car il utilise peu de composants, ceux-ci pouvant même être déjà présents dans une architecture de charge classique ;

La charge sans courant permise grâce à l'invention se comportera ainsi comme un chargeur à puissance très limitée avec une impédance de sortie très élevée.

## Revendications

1. Procédé de contrôle de charge d'une batterie (3) d'un équipement électrique (4), ladite batterie étant destinée à être chargée par un chargeur (2) connecté à une source d'alimentation (1) de manière à fournir un courant de charge (Ich) et à appliquer à ladite batterie une tension de charge, **caractérisé en ce qu'**il comporte :
- Une étape de connexion de la batterie (3) audit chargeur à un premier instant (t0), ladite batterie ayant un état de charge initial (SOC_ini),
- Une étape de détection de la connexion de la batterie au chargeur à un deuxième instant (t1), postérieur au premier instant (t0),
- Une étape de déclenchement automatique d'un processus de contrôle du courant de charge (Ich) et de maintien d'une tension non nulle aux bornes de ladite batterie (3), ledit processus étant déclenché à un troisième instant (t2), postérieur au deuxième instant, **caractérisé par**
- Une étape de régulation dudit courant de charge (Ich) lors dudit processus de contrôle du courant de charge (Ich), configurée pour maintenir un état de charge de la batterie à un niveau compris entre plus ou moins 5% de son état de charge initial.

2. Procédé selon la revendication 1, **caractérisé en ce que** ledit processus de contrôle du courant de charge est interrompu automatiquement dès lors que l'équipement (4) demande une puissance plus élevée que celle que peut fournir le chargeur (2).

3. Procédé selon la revendication 1 ou 2, **caractérisé en ce que** l'étape de déclenchement automatique intervient dans un intervalle de temps après le premier ou le deuxième instant qui correspond à 1% de la durée de charge totale de la batterie.

4. Procédé selon l'une des revendications 1 à 3, **caractérisé en ce que** le courant de charge (Ich) est contrôlé à une valeur inférieure à cent fois un courant de régime nominal de charge de ladite batterie (3).

5. Procédé selon l'une des revendications 1 à 4, **caractérisé en ce que** ledit troisième instant (t2) est déterminé après application d'un retard de durée déterminée après ledit deuxième instant (t1).

6. Procédé selon l'une des revendications 1 à 5, **caractérisé en ce que** ledit troisième instant (t2) est déterminé après application d'un retard de durée déterminée après ledit premier instant (t0).

7. Procédé selon l'une des revendications 1 à 6, **caractérisé en ce qu'**il comporte une étape de déclenchement d'une charge à pleine puissance à un quatrième instant (t3) postérieur audit troisième instant (t2), par réception d'une commande.

8. Procédé selon la revendication 7, **caractérisé en ce que** la commande est reçue en provenance de l'équipement électrique (4).

9. Procédé selon la revendication 7 ou 8, **caractérisé en ce que** la charge à pleine puissance est réalisée selon la méthode CC-CV.

10. Système de contrôle de charge d'une batterie (3) d'un équipement électrique (4), ladite batterie étant destinée à être chargée par un chargeur (2) connecté à une source d'alimentation (1) de manière à fournir un courant de charge (Ich) sur une ligne de charge et à appliquer à ladite batterie (3) une tension de charge, ladite batterie ayant un état de charge initial (SOC_ini) lorsqu'elle est connectée à un premier instant (t0) audit chargeur, la connexion de la batterie au chargeur (2) étant détectée à un deuxième instant (t1), postérieur au premier instant (t0), **caractérisé en ce qu'**il comporte :
- Un dispositif de contrôle (50) du courant de charge et de maintien d'une tension non nulle aux bornes de ladite batterie,
- Une unité de commande (51) dudit dispositif de contrôle, ladite unité de commande (51) comportant :
∘ un module de déclenchement automatique d'un processus de contrôle du courant de charge et de maintien d'une tension constante non nulle aux bornes de ladite batterie de contrôle, ledit processus étant déclenché à un troisième instant (t2), postérieur au deuxième instant, ledit processus étant déclenché à un instant (t2), postérieur au deuxième instant, **caractérisé par**
∘ un module de régulation dudit courant de charge (Ich), exécuté lors du processus de contrôle du courant de charge, ledit module de régulation étant configuré pour assurer un maintien d'un état de charge de la batterie à un niveau compris entre plus ou moins 5% de son état de charge initial.

11. Système selon la revendication 10, **caractérisé en ce qu'**il comporte un module d'interruption du processus de contrôle du courant de charge lorsque l'équipement (4) demande une puissance plus élevée que celle que peut fournir le chargeur (2).

12. Système selon la revendication 10 ou 11, **caractérisé en ce que** le processus de contrôle du courant de charge est déclenché dans un intervalle de temps après le premier ou le deuxième instant qui correspond à 1% de la durée de charge totale de la batterie.

13. Système selon l'une des revendications 10 à 12, **caractérisé en ce que** le courant de charge (Ich) est contrôlé à une valeur inférieure à cent fois un courant de régime nominal de charge de ladite batterie.

14. Système selon l'une des revendications 10 à 13, **caractérisé en ce que** le dispositif de contrôle (50) comporte un transistor (S1) connecté en série sur ladite ligne de charge.

15. Système selon l'une des revendications 10 à 14, **caractérisé en ce que** l'unité de commande (51) comporte un microprocesseur.

16. Système selon l'une des revendications 10 à 15, **caractérisé en ce que** ledit troisième instant (t2) est déterminé après application d'un retard de durée déterminée après ledit deuxième instant (t1).

17. Système selon l'une des revendications 10 à 15, **caractérisé en ce que** ledit troisième instant (t2) est déterminé après application d'un retard de durée déterminée après ledit premier instant (t0).

## Patentansprüche

1. Verfahren zur Ladekontrolle einer Batterie (3) eines elektrischen Geräts (4), wobei die Batterie dazu bestimmt ist, von einem Ladegerät (2) geladen zu werden, das an eine Stromversorgungsquelle (1) angeschlossen ist, um einen Ladestrom (Ich) zu liefern und um an die Batterie eine Ladespannung anzulegen, **dadurch gekennzeichnet, dass** es umfasst:
- einen Schritt der Verbindung der Batterie (3) mit dem Ladegerät zu einem ersten Zeitpunkt (t0), wobei die Batterie einen Anfangsladezustand (SOC_ini) aufweist,
- einen Schritt der Erkennung der Verbindung der Batterie mit dem Ladegerät zu einem zweiten Zeitpunkt (t1), der nach dem ersten Zeitpunkt (t0) liegt,
- einen Schritt der automatischen Auslösung eines Prozesses der Kontrolle des Ladestroms (Ich) und der Aufrechterhaltung einer von null verschiedenen Spannung an den Klemmen der Batterie (3), wobei dieser Prozess zu einem dritten Zeitpunkt (t2) ausgelöst wird, der nach dem zweiten Zeitpunkt liegt, **gekennzeichnet durch**
- einen Schritt der Regelung des Ladestroms (Ich) während des Prozesses der Kontrolle des Ladestroms (Ich), der dafür ausgelegt ist, einen Ladezustand der Batterie auf einer Höhe aufrechtzuerhalten, die von ihrem Anfangsladezustand um höchstens plus oder minus 5 % abweicht.

2. Verfahren nach Anspruch 1, **dadurch gekennzeichnet, dass** der Prozess der Kontrolle des Ladestroms automatisch unterbrochen wird, sobald das Gerät (4) eine Leistung anfordert, die höher als diejenige ist, die das Ladegerät (2) liefern kann.

3. Verfahren nach Anspruch 1 oder 2, **dadurch gekennzeichnet, dass** der Schritt der automatischen Auslösung in einem Zeitintervall nach dem ersten oder dem zweiten Zeitpunkt ausgeführt wird, welches 1 % der Gesamtladedauer der Batterie entspricht.

4. Verfahren nach einem der Ansprüche 1 bis 3, **dadurch gekennzeichnet, dass** der Ladestrom (Ich) auf einen Wert gesteuert wird, der hundertmal niedriger als ein Strom des Nennladebetriebs der Batterie (3) ist.

5. Verfahren nach einem der Ansprüche 1 bis 4, **dadurch gekennzeichnet, dass** der dritte Zeitpunkt (t2) nach Anwendung einer Verzögerung von einer bestimmten Dauer nach dem zweiten Zeitpunkt (t1) bestimmt wird.

6. Verfahren nach einem der Ansprüche 1 bis 5, **dadurch gekennzeichnet, dass** der dritte Zeitpunkt (t2) nach Anwendung einer Verzögerung von einer bestimmten Dauer nach dem ersten Zeitpunkt (t0) bestimmt wird

7. Verfahren nach einem der Ansprüche 1 bis 6, **dadurch gekennzeichnet, dass** es einen Schritt der Auslösung eines Ladens mit voller Leistung zu einem vierten Zeitpunkt (t3), der nach dem dritten Zeitpunkt (t2) liegt, durch Empfang eines Befehls umfasst.

8. Verfahren nach Anspruch 7, **dadurch gekennzeichnet, dass** der empfangene Befehl von dem elektrischen Gerät (4) kommt.

9. Verfahren nach Anspruch 7 oder 8, **dadurch gekennzeichnet, dass** das Laden mit voller Leistung gemäß dem CCCV-Ladeverfahren durchgeführt wird.

10. System zur Ladekontrolle einer Batterie (3) eines elektrischen Geräts (4), wobei die Batterie dazu bestimmt ist, von einem Ladegerät (2) geladen zu werden, das an eine Stromversorgungsquelle (1) angeschlossen ist, um einen Ladestrom (Ich) auf einer Ladeleitung zu liefern und um an die Batterie (3) eine Ladespannung anzulegen, wobei die Batterie einen Anfangsladezustand (SOC_ini) aufweist, wenn sie zu einem ersten Zeitpunkt (t0) mit dem Ladegerät verbunden wird, wobei die Verbindung der Batterie mit dem Ladegerät (2) zu einem zweiten Zeitpunkt (t1) erkannt wird, der nach dem ersten Zeitpunkt (t0) liegt, **dadurch gekennzeichnet, dass** es umfasst:
- eine Vorrichtung zur Kontrolle (50) des Ladestroms und der Aufrechterhaltung einer von null verschiedenen Spannung an den Klemmen der Batterie,
- eine Steuereinheit (51) der Vorrichtung zur Kontrolle, wobei die Steuereinheit (51) aufweist:
∘ ein Modul zur automatischen Auslösung eines Prozesses der Kontrolle des Ladestroms und der Aufrechterhaltung einer von null verschiedenen konstanten Spannung an den Klemmen der Kontrollbatterie, wobei dieser Prozess zu einem dritten Zeitpunkt (t2) ausgelöst wird, der nach dem zweiten Zeitpunkt liegt, wobei dieser Prozess zu einem Zeitpunkt (t2) ausgelöst wird, der nach dem zweiten Zeitpunkt liegt, **gekennzeichnet durch**
∘ ein Modul zur Regelung des Ladestroms (Ich), die während des Prozesses der Kontrolle des Ladestroms ausgeführt wird, wobei dieses Regelungsmodul dafür ausgelegt ist, eine Aufrechterhaltung eines Ladezustands der Batterie auf einer Höhe sicherzustellen, die von ihrem Anfangsladezustand um höchstens plus oder minus 5 % abweicht.

11. System nach Anspruch 10, **dadurch gekennzeichnet, dass** es ein Modul zur Unterbrechung des Prozesses der Kontrolle des Ladestroms, wenn das Gerät (4) eine Leistung anfordert, die höher als diejenige ist, die das Ladegerät (2) liefern kann, aufweist.

12. System nach Anspruch 10 oder 11, **dadurch gekennzeichnet, dass** der Prozess der Kontrolle des Ladestroms in einem Zeitintervall nach dem ersten oder dem zweiten Zeitpunkt ausgelöst wird, welches 1 % der Gesamtladedauer der Batterie entspricht.

13. System nach einem der Ansprüche 10 bis 12, **dadurch gekennzeichnet, dass** der Ladestrom (Ich) auf einen Wert gesteuert wird, der hundertmal niedriger als ein Strom des Nennladebetriebs der Batterie ist.

14. System nach einem der Ansprüche 10 bis 13, **dadurch gekennzeichnet, dass** die Vorrichtung zur Kontrolle (50) einen Transistor (S1) aufweist, der mit der Ladeleitung in Reihe geschaltet ist.

15. System nach einem der Ansprüche 10 bis 14, **dadurch gekennzeichnet, dass** die Steuereinheit (51) einen Mikroprozessor aufweist.

16. System nach einem der Ansprüche 10 bis 15, **dadurch gekennzeichnet, dass** der dritte Zeitpunkt (t2) nach Anwendung einer Verzögerung von einer bestimmten Dauer nach dem zweiten Zeitpunkt (t1) bestimmt wird.

17. System nach einem der Ansprüche 10 bis 15, **dadurch gekennzeichnet, dass** der dritte Zeitpunkt (t2) nach Anwendung einer Verzögerung von einer bestimmten Dauer nach dem ersten Zeitpunkt (t0) bestimmt wird.

## Claims

1. Method for controlling charging of a battery (3) of a piece of electrical equipment (4), said battery being intended to be charged by a charger (2) connected to a power source (1) so as to deliver a charging current (Ich) and to apply, to said battery, a charging voltage, **characterized in that** it comprises:
- A step of connecting the battery (3) to said charger at a first time (t0), said battery having an initial state of charge (SOC_ini),
- A step of detecting the connection of the battery to the charger at a second time (t1), subsequent to the first time (t0),
- A step of automatically triggering a process of controlling the charging current (Ich) and of maintaining a non-zero voltage across the terminals of said battery (3), said process being triggered at a third time (t2), subsequent to the second time, **characterized by**
- A step of regulating said charging current (Ich) during said process of controlling the charging current (Ich), said step being configured to maintain a state of charge of the battery at a level comprised between plus or minus 5% of its initial state of charge.

2. Method according to Claim 1, **characterized in that** said process of controlling the charging current is automatically interrupted as soon as the piece of equipment (4) demands a power higher than that which the charger (2) is able to deliver.

3. Method according to Claim 1 or 2, **characterized in that** the automatic triggering step occurs in a time interval after the first or second time that corresponds to 1% of the total charging time of the battery.

4. Method according to one of Claims 1 to 3, **characterized in that** the charging current (Ich) is controlled to a value one-hundred times lower than a current of a nominal charging regime of said battery (3).

5. Method according to one of Claims 1 to 4, **characterized in that** said third time (t2) is set after application of a delay of set duration after said second time (t1).

6. Method according to one of Claims 1 to 5, **characterized in that** said third time (t2) is set after application of a delay of set duration after said first time (t0).

7. Method according to one of Claims 1 to 6, **characterized in that** it comprises a step of triggering charging at full power at a fourth time (t3) subsequent to said third time (t2), via reception of a command.

8. Method according to Claim 7, **characterized in that** the command is received from the piece of electrical equipment (4).

9. Method according to Claim 7 or 8, **characterized in that** the charging at full power is carried out using the CC-CV method.

10. System for controlling charging of a battery (3) of a piece of electrical equipment (4), said battery being intended to be charged by a charger (2) connected to a power source (1) so as to deliver a charging current (Ich) over a charging line and to apply, to said battery (3), a charging voltage, said battery having an initial state of charge (SOC_ini) when it is connected at a first time (t0) to said charger, the connection of the battery to the charger (2) being detected at a second time (t1), subsequent to the first time (t0), **characterized in that** it comprises:
- A device (50) for controlling the charging current and for maintaining a non-zero voltage across the terminals of said battery,
- A unit (51) for commanding said control device, said command unit (51) comprising:
∘ a module automatically triggering a process of controlling the charging current and of maintaining a constant non-zero voltage across the terminals of said battery for controlling, said process being triggered at a third time (t2), subsequent to the second time, said process being triggered at a time (t2), subsequent to the second time, **characterized by**
∘ a module for regulating said charging current (Ich), which module is executed during the process of controlling the charging current, said regulating module being configured to ensure a maintenance of a state of charge of the battery at a level comprised between plus or minus 5% of its initial state of charge.

11. System according to Claim 10, **characterized in that** it comprises a module for interrupting the process of controlling the charging current when the piece of equipment (4) demands a power higher than that which the charger (2) is able to deliver.

12. System according to Claim 10 or 11, **characterized in that** the process of controlling the charging current is triggered in a time interval after the first or second time that corresponds to 1% of the total charging time of the battery.

13. System according to one of Claims 10 to 12, **characterized in that** the charging current (Ich) is controlled to a value one-hundred times lower than a current of a nominal charging regime of said battery.

14. System according to one of Claims 10 to 13, **characterized in that** the control device (50) comprises a transistor (S1) connected in series to said charging line.

15. System according to one of Claims 10 to 14, **characterized in that** the command unit (51) comprises a microprocessor.

16. System according to one of Claims 10 to 15, **characterized in that** said third time (t2) is set after application of a delay of set duration after said second time (t1).

17. System according to one of Claims 10 to 15, **characterized in that** said third time (t2) is set after application of a delay of set duration after said first time (t0).
